# EUROPÄISCHE PATENTSCHRIFT

(11) **EP 1 890 902 B1**
(45) Veröffentlichungstag und Bekanntmachung des Hinweises auf die Patenterteilung: **07.10.2009**
(21) Anmeldenummer: 06761652.4
(22) Anmeldetag: 14.06.2006
(51) Int. Cl.: B60K 26/02

(54) **PEDALANORDNUNG FÜR EIN KRAFTFAHRZEUG**
PEDAL ASSEMBLY FOR A MOTOR VEHICLE
SYSTÈME PÉDALE D'UN VÉHICULE AUTOMOBILE

(30) Priorität: 17.06.2005 DE 102005028514
(43) Veröffentlichungstag der Anmeldung: 27.02.2008
(73) Patentinhaber: ZF Friedrichshafen AG, 88038 Friedrichshafen (DE)
(72) Erfinder: BURGSTALER, Andree, 32351 Dielingen (DE); DÜTZ, Jan, 49401 Damme (DE); MEYER, Wolfgang, 49088 Osnabrück (DE); HÜLSMANN, Silke, 49577 Ankum (DE)
(86) Internationale Anmeldenummer: PCT/DE2006/001020
(87) Internationale Veröffentlichungsnummer: WO 2006/133683

(56) Entgegenhaltungen:
- EP-A2- 0 788 921
- EP-A2- 1 428 715
- DE-A1- 10 135 537

## Beschreibung

Die Erfindung betrifft eine Pedalanordnung für ein Kraftfahrzeug, mit einer Halterung und einem an dieser über eine Steckverbindung befestigten E-Gasmodul mit einem Pedallager, an welchem ein Gaspedal um eine Schwenkachse schwenkbar gelagert ist.

Bekannte E-Gasmodule werden z. B. durch Schraubverbindungen (zumeist drei) mit der Fahrzeugkarosserie bzw. dem Pedalbock verbunden. Dadurch besteht die Möglichkeit, diese E-Gasmodule beliebig oft zu montieren und zu demontieren. Außerdem wird eine Befestigung realisiert, welche die Kraftübertragung auf die Fahrzeugkarosserie bzw. den Pedalbock problemlos ermöglicht. Weiterhin wurde diese Art der Befestigung für verschiedene Modellreihen der Fahrzeughersteller standardisiert.

Die bekannten Befestigungen von E-Gasmodulen sind allerdings sehr kosten- und montageintensiv, da zumeist drei Befestigungspunkte mit Buchsen, Schrauben und/oder Muttern ausgerüstet werden. Weiterhin verursachen diese Bauteile aufgrund der damit verbundenen Logistik Mehrkosten. Ferner können diese Bauteile in einem nicht unerheblichen Maße zum Gesamtgewicht der Pedalanordnung beitragen. Schließlich sind im Falle einer Wiederverwertung regelmäßig die metallischen Bauteile (Schrauben, Buchsen, Muttern) zu entfernen, was den Aufwand und somit die Kosten für die Wiederverwertung erhöht.

Aus der DE 101 35 537 A1 ist ein Fahrpedalmodul für einen Motor bekannt, wobei ein Sensor zur Erfassung der Stellung eines Pedalhebels zu einer Montageplatte vorgesehen ist, die der schwenkbaren Lagerung des Pedalhebels dient. Der Stellungssensor ist als eigenständige Baueinheit ausgebildet, die an der Montageplatte angesetzt wird, wobei der Sensor von einem Gehäuse aufgenommen ist. An einer Breitseite der Montageplatte ist ein Lagerbock einstückig angeformt, der einen feststehenden Bestandteil des Pedalhebelagers bildet. Das Sensorgehäuse besitzt einen schienenartigen Fuß, der in einer an der Montageplatte ausgebildeten Haltenut parallel zur Drehachse eingeschoben ist. Dazu ist die Haltenut an einer Breitseite der Montageplatte auf der dem Lagerbock gegenüberliegenden Seite axial offen. Sie besitzt ein T-förmiges Querschnittsprofil, das den Fuß des Sensorgehäuses formschlüssig umschließt, so dass dieser in Richtung parallel zu der Drehachse verschiebbar, ansonsten jedoch festgelegt ist.

Dabei bilden der Sensor und das Pedallager ein E-Gasmodul, welches aus seinen Einzelteilen unmittelbar an der Montageplatte bzw. Halterung zusammenzusetzen ist. Auch bei einer Demontage des E-Gasmoduls von der Halterung muss dieses am Ort der Montageplatte in seine Einzelteile zerlegt werden.

Weiterhin offenbart die EP 0 788 921 A2 bereits eine Pedalanordnung für ein Kraftfahrzeug, welche eine Halterung und einem an dieser über eine Steckverbindung befestigten E-Gasmodul mit einem Pedallager aufweist, an welchem ein Gaspedal um eine Schwenkachse schwenkbar gelagert ist, und wobei das E-Gasmodul eine von der Halterung unabhängige bauliche Einheit bildet

Aufgabe der Erfindung ist es, eine Pedalanordnung der eingangs genannten Art derart weiterzubilden, dass die Montage und gegebenenfalls auch die Demontage des E-Gasmoduls an bzw. von der Halterung vereinfacht ist.

Diese Aufgabe wird mit einer Pedalanordnung nach Anspruch 1 gelöst. Bevorzugte Weiterbildungen sind in den Unteransprüchen gegeben.

Die Pedalanordnung für ein Kraftfahrzeug weist eine Halterung und ein an dieser über eine Steckverbindung, welche eine erste Haltenut und ein in diese eingesteckten ersten Fuß aufweist, der formschlüssig in die erste Haltenut eingreift, insbesondere formschlüssig befestigtes E-Gasmodul mit einem Pedallager auf, an welchem ein Gaspedal um eine Schwenkachse schwenkbar gelagert ist, wobei das E-Gasmodul eine von der Halterung unabhängige bauliche Einheit bildet. Erfindungsgemäß ist vorgesehen, dass die Steckverbindung im Abstand zur ersten Haltenut eine zweite Haltenut und im Abstand zum ersten Fuß einen zweiten Fuß aufweisen, der in die zweite Haltenut eingesteckt ist und insbesondere formschlüssig in diese eingreift. Somit ist ein relativ kurzer Montageweg gegenüber einer einzigen, lang ausgeführten Nut bzw. einem einzigen, lang ausgeführtem Fuß möglich, so dass eine schnelle und sicherere Montage erzielbar ist und ein Verklemmen zwischen Haltenut und Fuß praktisch kaum oder gar nicht auftritt.

Bei der erfindungsgemäßen Pedalanordnung ist es somit möglich, das E-Gasmodul als eigenständige und fertig montierte Einheit an die Halterung anzustecken, wodurch die Montage des E-Gasmoduls an der Halterung vereinfacht ist. Unter einem E-Gasmodul soll hierbei insbesondere eine eigenständige bauliche Einheit verstanden werden, die zumindest ein Pedallager und bevorzugt auch einen Sensor aufweist, welcher die Schwenkbewegungen des Gaspedals relativ zu dem Pedallager bzw. zu der Halterung erfassen kann. Das bevorzugt als Schwenklager ausgebildete Pedallager und gegebenenfalls auch der Sensor sind somit integrativer Bestandteil der von der Halterung unabhängigen baulichen Einheit, die von dem E-Gasmodul gebildet ist. Dabei sitzen das Pedallager und gegebenenfalls der Sensor bevorzugt zusammen in oder an einem Gehäuse des E-Gasmoduls.

Ferner können sich elektrische Verbindungen bzw. Leitungen von dem E-Gasmodul bis hin zu einer Steuervorrichtung erstrecken, welche die von dem Sensor erfassten Signale auswerten und den Motor eines Kraftfahrzeugs entsprechend der erfassten Schwenkstellung des Gaspedals ansteuern kann. Um das E-Gasmodul trennbar mit der Steuervorrichtung elektrisch zu verbinden, kann eine Steckverbindung vorgesehen sein, deren Buchse oder Stecker bevorzugt an dem E-Gasmodul bzw. an dem Gehäuse vorgesehen und elektrisch mit dem Sensor verbunden ist. Somit ist in elektrischer Hinsicht das E-Gasmodul als eine von dem Kraftfahrzeug bzw. der Steuervorrichtung trennbare bauliche Einheit ausbildbar.

Das E-Gasmodul ist über die Steckverbindung bevorzugt lösbar an der Halterung befestigt und kann dabei als bauliche Einheit, insbesondere zusammen mit dem Gaspedal, wieder von der Halterung getrennt werden. Damit sich das E-Gasmodul aber nicht unbeabsichtigt von der Halterung löst, kann die Steckverbindung gleichzeitig eine Klemmverbindung bilden, welche das E-Gasmodul zusätzlich zu der formschlüssigen Steckverbindung kraftschlüssig an der Halterung festlegt. Alternativ oder ergänzend zu der Klemmverbindung ist es aber auch möglich, das E-Gasmodul an der Halterung über eine Schnappverbindung zu sichern, die bevorzugt als lösbare Schnappverbindung ausgebildet ist.

Die erste Haltenut bildet somit eine Führung für den ersten Fuß, in welcher dieser zum Zwecke der Montage oder Demontage verschiebbar geführt ist und insbesondere senkrecht zur Verschieberichtung formschlüssig gehalten ist. Dabei verläuft die erste Haltenut insbesondere senkrecht zur Schwenkachse, so dass der erste Fuß senkrecht zu dieser in die erste Haltenut eingesteckt bzw. eingeschoben wird. Durch die senkrecht zur Dreh- bzw. Schwenkachse verlaufende erste Haltenut können auf das E-Gasmodul einwirkende Drehmomente einfach und sicher aufgenommen werden. Alternativ kann die erste Haltenut aber auch parallel zur Schwenkachse verlaufen, so dass der erste Fuß parallel zu dieser in die erste Haltenut eingesteckt bzw. eingeschoben wird.

Ist die Pedalanordnung in einem Kraftfahrzeug eingebaut, verläuft die erste Haltenut insbesondere von "oben" nach "unten", wobei der erste Fuß bzw. das E-Gasmodul bevorzugt von "oben" nach "unten" in die erste Haltenut eingesteckt bzw. eingeschoben wird. Ferner kann im montierten Zustand das E-Gasmodul an einem Anschlag anliegen, der ein weiteres Verschieben des ersten Fußes bzw. des E-Gasmoduls, insbesondere nach "unten", beschränkt. Die nach "unten" verlaufende Montagerichtung stellt dabei eine gewisse Eigensicherung für das E-Gasmodul dar, so dass sich dieses nicht selbsttätig bzw. durch Vibrationen von der Halterung lösen kann. Die Begriffe "oben" und "unten" sind hierbei im Zusammenhang mit dem Schwerefeld der Erde zu sehen. Das Eigengewicht des E-Gasmoduls sichert somit den festen Zusammenhalt von E-Gasmodul und Halterung, wobei dieser Zusammenhalt über die zusätzlich mögliche Schnappverbindung ergänzend verstärkt sein kann.

Bevorzugt ist am ersten Fuß wenigstens ein Vorsprung vorgesehen, der in wenigstens einen in der ersten Haltenut vorgesehenen Hinterschnitt eingreift. Ferner weist die erste Haltenut insbesondere einen Einführungsbereich sowie einen Eingriffsbereich mit dem Hinterschnitt auf, in welchen der am ersten Fuß vorgesehene Vorsprung eingreift, wobei die Nutöffnung des Einführungsbereichs größer als die Nutöffnung des Eingriffsbereichs ist. Zur Montage kann der erste Fuß mit seinem Vorsprung durch die Nutöffnung des Einführungsbereichs hindurch in die Haltenut eingebracht und danach entlang derselben bis in den Eingriffsbereich, bevorzugt senkrecht zur Schwenkachse, geschoben werden, so dass durch den in den Hinterschnitt eingreifenden Vorsprung ein sicherer Zusammenhalt von E-Gasmodul und Halterung gewährleistet ist. Dazu gehen der Einführungsbereich und der Eingriffsbereich bevorzugt ineinander über. Ferner ist die Nutöffnung des Einführungsbereichs insbesondere so groß, dass der erste Fuß mit seinem Vorsprung auch durch diese hindurch in die erste Haltenut eingebracht werden kann. Dafür kann die Nutöffnung des Einführungsbereichs senkrecht zur Steckrichtung und/oder parallel zur Schwenkachse größer als die Nutöffnung des Eingriffsbereichs sein, so dass insbesondere die Breite der Nutöffnung des Einführungsbereichs quer zur Steckrichtung größer als die Breite der Nutöffnung des Eingriffsbereichs quer zur Steckrichtung ist. Ferner sind der Eingriffsbereich und der Einführungsbereich bevorzugt, z.B. in einer Richtung senkrecht zur Schwenkachse, nebeneinander angeordnet

Die erste Haltenut und der erste Fuß können zumindest bereichsweise einen T-förmigen Querschnitt aufweisen, so dass der T-förmige Bereich des ersten Fußes in die T-förmige Ausnehmung der ersten Haltenut formschlüssig eingreift. Die Symmetrieebene dieser T-förmigen Querschnitte verläuft dabei bevorzugt senkrecht zur Schwenkachse. Wenn die erste Haltenut senkrecht zur Schwenkachse verläuft, ist für die Montage und gegebenenfalls auch für die Demontage des E-Gasmoduls an bzw. von der Halterung der erste Fuß mit seinem T-förmigen Bereich in einer Richtung senkrecht zur Drehachse in der ersten Haltenut bzw. in dem T-förmigen Bereich der ersten Haltenut verschiebbar.

Grundsätzlich ist es möglich, die erste Haltenut an dem E-Gasmodul und den ersten Fuß an der Halterung auszubilden. Bevorzugt ist jedoch der erste Fuß an dem E-Gasmodul und die erste Haltenut an der Halterung vorgesehen, wobei der erste Fuß einstückig mit dem Gehäuse des E-Gasmoduls z.B. aus Kunststoff herstellbar ist.

Die zweite Haltenut verläuft bevorzugt senkrecht zur Schwenkachse, so dass der zweite Fuß senkrecht zur Schwenkachse in die zweite Haltenut eingesteckt bzw. eingeschoben wird. Alternativ kann die zweite Haltenut aber auch parallel zur Schwenkachse verlaufen, so dass der zweite Fuß parallel zu dieser in die zweite Haltenut eingesteckt bzw. eingeschoben wird. Die zweite Haltenut bildet eine Führung für den zweiten Fuß, in welcher dieser zum Zwecke der Montage oder Demontage, insbesondere senkrecht zur Schwenkachse, verschiebbar geführt ist und bevorzugt senkrecht zur Verschieberichtung formschlüssig gehalten ist. Ferner liegen die erste Haltenut und die zweite Haltenut insbesondere auf einer gemeinsamen Geraden.

Die beiden Füße sind bevorzugt an dem E-Gasmodul und die beiden Haltenuten an der Halterung vorgesehen, wobei der zweite Fuß z.B. einstückig mit dem Gehäuse des E-Gasmoduls z.B. aus Kunststoff hergestellt sein kann. Alternativ können aber auch die Haltenuten an dem E-Gasmodul und die Füße an der Halterung vorgesehen sein.

Die zweite Haltenut ist bevorzugt an ihrer der ersten Haltenut zugewandten Stirnseite geschlossen, so dass diese geschlossene Stirnseite einen Anschlag bilden kann, bis zu welchem der zweite Fuß in die zweite Haltenut einschiebbar ist. Ein solcher Anschlag dient zum einen als zusätzliche Sicherung, zum anderen aber auch als Montagehilfe. Ferner kann die zweite Haltenut an ihrer der ersten Haltenut abgewandten Stirnseite offen sein, so dass der zweite Fuß durch diese offene Stirnseite hindurch in die zweite Haltenut einschiebbar bzw. einsteckbar ist. Auch ist es möglich, die erste Haltenut an ihrer der zweiten Haltenut abgewandten Stirnseite offen auszubilden.

Sind das E-Gasmodul und die Halterung nicht nur über eine Steckverbindung, sondern zusätzlich auch noch über eine Schnappverbindung miteinander verbunden, so kann die Steckverbindung zusätzlich einen Schnapphaken und eine Ausnehmung aufweisen, in welche der Schnapphaken eingreift. Der zweite Fuß kann den Schnapphaken aufweisen, der in die in der Halterung oder dem E-Gasmodul vorgesehene Ausnehmung eingreift, wobei der Schnapphaken insbesondere an dem dem ersten Fuß abgewandten Ende des zweiten Fußes angeordnet ist. Der Schnapphaken und die Ausnehmung bilden die oben genannte Schnappverbindung, die insbesondere als lösbare Schnappverbindung ausgebildet ist.

Bevorzugt ist am zweiten Fuß wenigstens ein Vorsprung vorgesehen, der in wenigstens einen in der zweiten Haltenut vorgesehenen Hinterschnitt eingreift. Insbesondere können die zweite Haltenut und der zweite Fuß zumindest bereichsweise einen T-förmigen Querschnitt aufweisen, so dass der T-förmige Bereich des zweiten Fußes in die T-förmige Ausnehmung der zweiten Haltenut formschlüssig eingreift. Die Symmetrieebene dieser T-förmigen Querschnitte verläuft dabei bevorzugt senkrecht zur Schwenkachse. Wenn die zweite Haltenut senkrecht zur Schwenkachse verläuft, ist für die Montage und gegebenenfalls auch für die Demontage des E-Gasmoduls an bzw. von der Halterung der zweite Fuß mit seinem T-förmigen Bereich in einer Richtung senkrecht zur Drehachse in der zweiten Haltenut bzw. in dem T-förmigen Bereich der zweiten Haltenut verschiebbar.

Mit der erfindungsgemäßen Pedalanordnung ist es möglich, eine Fixierung des E-Gasmoduls an der Halterung zu realisieren, wobei diese Fixierung möglichst ohne zusätzliche Befestigungsbauteile auskommt. Es werden insbesondere die Möglichkeiten des Werkstoffes Kunststoff genutzt, wobei die Halterung und/oder das Gehäuse des E-Gasmoduls einschließlich der Steckverbindung und gegebenenfalls der Schnappverbindung aus Kunststoff herstellbar sind. Der Korpus (bzw. Gehäuse) des E-Gasmoduls kann so ausgeführt werden, dass er auf der dem Pedal zugewandten Seite mit Hilfe der Steck- bzw. Klemmverbindung mit dem Pedalmodul verbunden, insbesondere eingeschoben bzw. eingedreht wird. Dabei sind auf der dem Pedal zugewandten Seite (z.B. im Bereich des ersten Fußes) die höheren resultierenden Kräfte zu erwarten. Auf der dem Pedal abgewandten Seite (z.B. im Bereich des zweiten Fußes) hingegen, kann mittels der Steckverbindung ebenfalls ein Kraft- und Formschluss erzielt werden. Weiterhin ist es möglich, hier eine Sicherung gegen das Herausrutschen des E-Gasmoduls durch einen Schnapphaken zu verwirklichen. Dabei ist aus der Praxis der Automobilhersteller keine Prüfung bekannt, welche das E-Gasmodul in diese Kraftrichtung belastet.

Insbesondere sind folgende Vorteile mit der erfindungsgemäßen Pedalanordnung erzielbar:
- Fixierung des E-Gasmoduls an der Halterung ohne zusätzliche Befestigungselemente.
- Erleichterung der Montage des E-Gasmoduls an der Halterung durch die durch die Steckverbindung geschaffene Einstecklösung.
- Gewichtseinspärung durch nicht mehr erforderliche Befestigungselemente, wie z.B. Bolzen, Schrauben oder Muttern. Kosteneinsparung durch einfache Montage und den möglichen Wegfall der Befestigungselemente.
- Möglichkeit der Demontage ohne zusätzliches Werkzeug.
- Eine Demontage kann beliebig oft wiederholbar sein, da bevorzugt keine gewindeformenden Schrauben Verwendung finden.
- Im Falle der Wiederverwertung kann eine aufwändige Demontage des E-Gasmoduls vermieden werden, da bevorzugt keine Metallteile wie z. B. Buchsen, Schrauben oder Muttern Verwendung gefunden haben.

Ferner betrifft die Erfindung ein Kraftfahrzeug mit einer Pedalanordnung, wobei die Pedalanordnung am Fahrzeugaufbau, insbesondere an der den Fahrgastraum von dem Motorraum trennenden Spritzwand, befestigt ist. Die Pedalanordnung ist dabei eine erfindungsgemäße Pedalanordnung, die gemäß allen zuvor genannten Ausgestaltungen weitergebildet sein kann.

Die Erfindung wird nachfolgend anhand einer bevorzugten Ausführungsform unter Bezugnahme auf die Zeichnung beschrieben. In der Zeichnung zeigen:
- Fig. 1: eine perspektivische Ansicht einer Ausführungsform der erfindungsgemäßen Pedalanordnung,
- Fig. 2: eine erste schematische Schnittansicht der Pedalanordnung nach Fig.1,
- Fig. 3: eine zweite schematische Schnittansicht der Pedalanordnung nach Fig.1,
- Fig. 4: eine dritte schematische Schnittansicht der Pedalanordnung nach Fig.1,
- Fig. 5: eine perspektivische Ansicht des E-Gasmoduls nach Fig.1 und
- Fig. 6: eine perspektivische Ansicht der Halterung nach Fig.1 ohne E-Gasmodul.

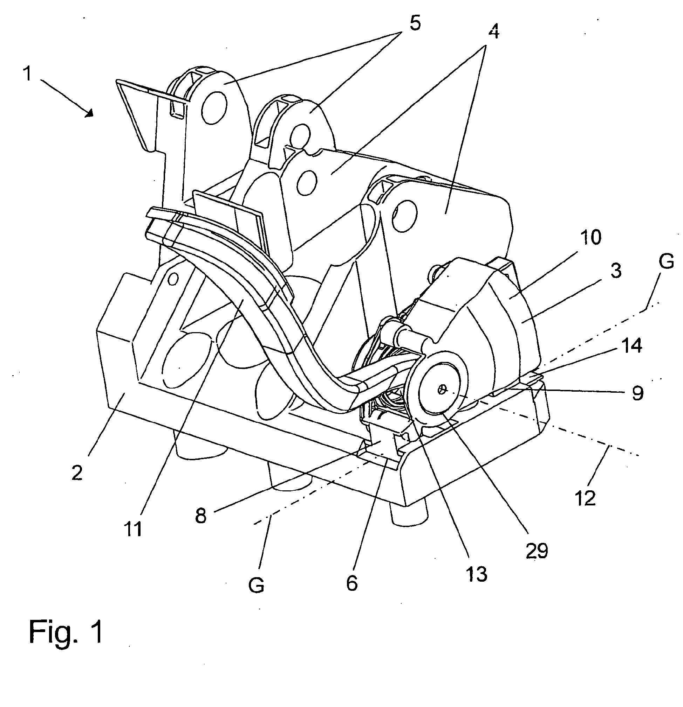

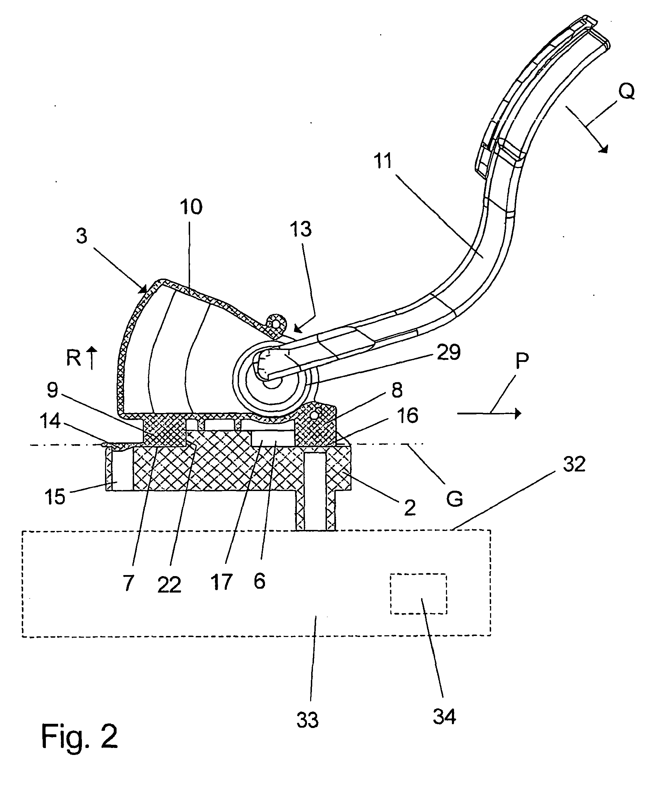

Aus Fig. 1 ist eine perspektivische Ansicht einer Ausführungsform der erfindungsgemäßen Pedalanordnung 1 ersichtlich, wobei an einem Pedalbock (Halterung) 2 ein E-Gasmodul 3 befestigt ist. Der Pedalbock 2 dient als Halterung für das E-Gasmodul 3 und ist ferner mit Aufnahmen 4 und 5 für ein nicht dargestelltes Bremspedal und ein ebenfalls nicht dargestelltes Kupplungspedal versehen. Bei einer hier nicht gezeigten Automatik-Variante der Pedalanordnung kann natürlich die Aufnahme 5 für das Kupplungspedal entfallen. Der Pedalbock 2 ist als einstückiges Kunststoff Spritzgussteil hergestellt und weist zwei Haltenuten 6 und 7 (siehe Fig. 2) auf, in welche zwei an dem E-Gasmodul 3 vorgesehene Füße 8 und 9 eingreifen. Das E-Gasmodul 3 ist mit einem aus Kunststoff hergestellten Gehäuse 10 versehen, mit welchem die Füße 8 und 9 einstückig ausgebildet sind. Ferner ist ein Gaspedal 11 um eine Schwenkachse 12 in einem Pedallager 29 des E-Gasmoduls 3 schwenkbar an diesem gelagert und greift durch eine Öffnung 13 in das Gehäuse 10 des E-Gasmoduls 3 ein. Die Nuten 6 und 7 sowie die Füße 8 und 9 liegen dabei auf einer Geraden G, die senkrecht zur Schwenkachse 12 verläuft.

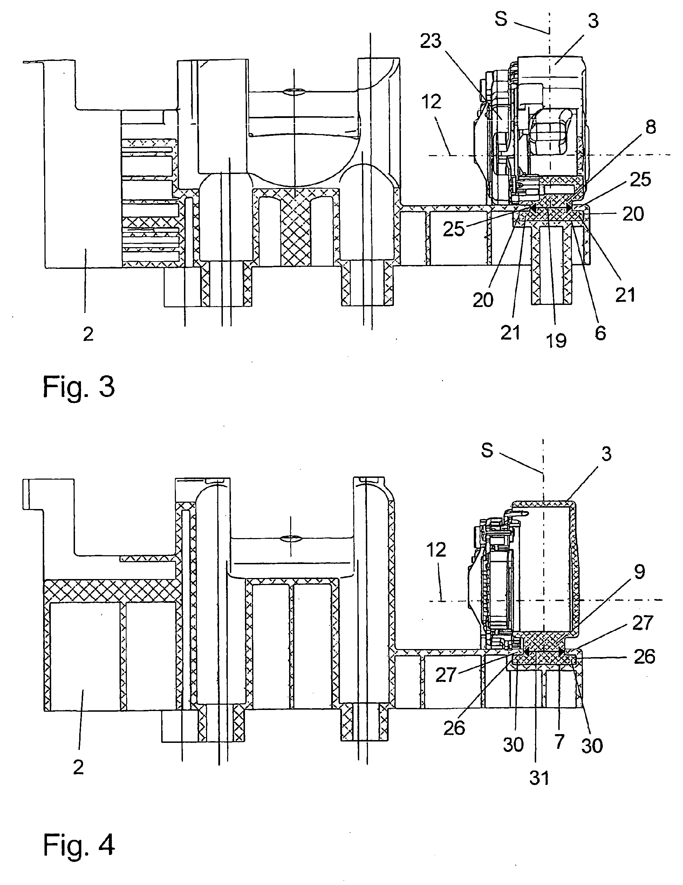

Aus den Fig. 2 bis 4 sind unterschiedliche Schnittansichten der Pedalanordnung 1 ersichtlich, wobei Fig. 2 einen Schnitt entlang der Geraden G und senkrecht zur Geraden 12 zeigt. Fig. 3 zeigt einen durch den Fuß 8 verlaufenden Schnitt parallel zur Geraden 12 und senkrecht zur Geraden G. Ferner zeigt Fig. 4 einen durch den Fuß 9 verlaufenden Schnitt parallel zur Geraden 12 und senkrecht zur Geraden G.

An dem Fuß 9 ist ein Schnapphaken 14 angeordnet, der in eine in dem Pedalbock 2 vorgesehene Ausnehmung 15 eingreift und einstückig mit dem Fuß 9 aus Kunststoff ausgebildet ist. Der Schnapphaken 14 liegt dabei ebenfalls auf der Geraden G und ist an dem dem Fuß 8 abgewandten Ende des Fußes 9 vorgesehen.

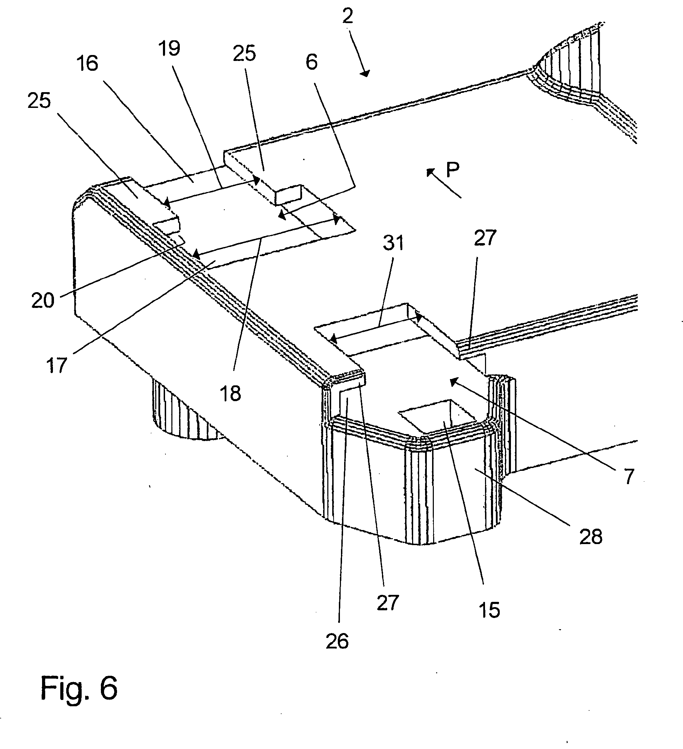

Die Nut 6 weist einen Eingriffsbereich 16 und einen Einführungsbereich 17 auf, dessen Nutöffnung 18 (siehe Fig. 6) groß genug ist, dass der Fuß 8 durch die Nutöffnung 18 hindurch in die Nut 6 zur Montage des E-Gasmoduls 3 an dem Pedalbock 2 eingebracht werden kann. Anschließend wird das E-Gasmodul 3 in Richtung des Pfeils P verschoben, bis dass der Fuß 8 in den Eingriffsbereich 16 gelangt. Die Nutöffnung 19 des Eingriffsbereichs 16 ist schmaler als die Nutöffnung 18, wobei die Nut 6 im Eingriffsbereich 16 zwei Hinterschnitte 20 aufweist, in welche an dem Fuß 8 vorgesehene Eingriffsvorsprünge 21 eingreifen. Der Fuß 8 und der Eingriffsbereich 16 sind dabei im Querschnitt T-förmig ausgebildet, wobei die Symmetrieebene S dieses T-Profils bevorzugt auf der Geraden G liegt und senkrecht zur Geraden 12 verläuft.

Ferner weist die Nut 7 Hinterschnitte 26 und der Fuß 9 Eingriffsvorsprünge 30 auf, die in die Hinterschnitte 26 eingreifen, wobei die Nut 7 und der Fuß 9 ein im Wesentlichen T-förmiges Querschnittsprofil aufweisen. Bevorzugt liegt die Symmetrieebene S dieses T-Profils dabei auf der Geraden G und verläuft senkrecht zur Geraden 12.

Die Nut 7 ist an ihrer der Nut 6 zugewandten Stirnseite 22 verschlossen, so dass beim Verschieben des E-Gasmoduls 3 in Richtung des Pfeils P die Stirnseite 22 für den Fuß 9 einen Anschlag bildet, an welchem der Fuß 9 im vollständig montierten Zustand des E-Gasmoduls 3 anliegt. Durch den in die Ausnehmung 15 eingreifenden Schnapphaken 14 ist ferner ein Lösen des E-Gasmoduls 3 von dem Pedalbock 2 in Gegenrichtung des Pfeils P sicher verhindert. Erst durch ein Außer-Eingriff-Bringen von Schnapphaken 14 und Ausnehmung 15 ist eine Demontage des E-Gasmaduls 3 durch Verschieben in Gegenrichtung von P möglich, wobei das Außer-Eingriff-Bringen durch Anheben des Schnapphakens 14 in Richtung des Pfeils R erfolgt.

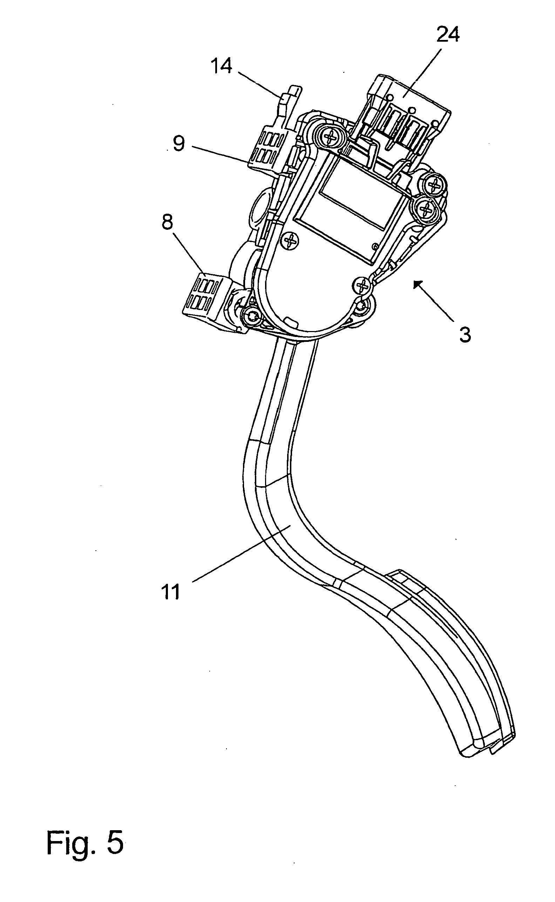

Das Pedal 11 kann relativ zum Gehäuse 10 bzw. zum Pedalbock 2 innerhalb vorbestimmter Grenzen in Richtung und in Gegenrichtung des Pfeils Q um die Schwenkachse 12 geschwenkt werden, wobei ein aus Figur 3 ersichtlicher Sensor 23 den Schwenkwinkel des Pedals 11 erfassen und als elektronisches Signal an eine Steuervorrichtung 34 abgeben kann. Hierzu ist, wie aus Fig. 5 ersichtlich, eine Steckerbuchse 24 an dem E-Gasmodul 3 befestigt.

Der Pedalbock 2 ist, wie schematisch und mit gestrichelten Linien in Fig. 2 dargestellt, am Fahrzeugaufbau 32 eines Kraftfahrzeugs 33 befestigt, in welchem ebenfalls die elektrisch mit dem E-Gasmodul 3 bzw. mit dem Sensor 23 verbundene Steuervorrichtung 34 angeordnet ist.

Aus Fig. 6 ist eine perspektivische Teilansicht des Pedalbocks 2 ohne E-Gasmodul ersichtlich, so dass die Form der Nuten 6 und 7 deutlich wird. Insbesondere weist der Einführungsbereich 17 keine Hinterschnitte auf, wohingegen die Hinterschnitte 20 im Eingriffsbereich 16 von Vorsprüngen 25 definiert sind, die die Nutöffnung 19 begrenzen. Ferner sind die Hinterschnitte 26 der Nut 7 durch Vorsprünge 27 definiert, welche die Nutöffnung 31 der Nut 7 begrenzen.

Auch ist aus Fig. 6 ersichtlich, dass die Ausnehmung 15 in einem einstückig mit dem Pedalbock 2 ausgebildeten Stützbereich 28 vorgesehen ist, auf dem der Fuß 9 aufliegt, wenn der Fuß 8 in dem Einführungsbereich 17 sitzt, bevor das E-Gasmodul 3 durch Verschieben in Richtung des Pfeils P mit dem Pedalbock 2 formschlüssig in Eingriff gebracht wird. Der Stützbereich 28 dient somit als Montagehilfe.

Das erfindungsgemäße E-Gasmodul 3 kann in einfacher Weise lösbar an dem Pedalbock 2 befestigt werden, ohne dass zusätzliche Befestigungsmittel wie Schrauben, Bolzen, Buchsen oder Muttern erforderlich sind. Ferner kann das E-Gasmodul 3 vollständig vormontiert werden, bevor es an dem Pedalbock 2 befestigt wird, was eine Montageerleichterung darstellt und die Variantenvielfalt erhöht, da unterschiedliche E-Gasmodule an unterschiedliche Pedalböcke montiert werden können, wenn die Steckverbindung einheitlich gehalten ist.

### Bezugszeichenliste

- 1: Pedalanordnung
- 2: Pedalbock / Halterung
- 3: E-Gasmodul
- 4: Aufnahme für Bremspedal
- 5: Aufnahme für Kupplungspedal
- 6: Haltenut in Pedalbock
- 7: Haltenut in Pedalbock
- 8: Fuß des E-Gasmoduls
- 9: Fuß des E-Gasmoduls
- 10: Gehäuse des E-Gasmoduls
- 11: Gaspedal
- 12: Schwenkachse für Gaspedal
- 13: Öffnung in Gehäuse
- 14: Schnapphaken
- 15: Ausnehmung in Pedalbock
- 16: Eingriffsbereich
- 17: Einführungsbereich
- 18: Nutöffnung des Einführungsbereichs
- 19: Nutöffnung des Eingriffsbereichs
- 20: Hinterschnitt
- 21: Eingriffsvorsprung
- 22: Stirnseite / Anschlag
- 23: Sensor
- 24: Steckerbuchse
- 25: Vorsprung
- 26: Hinterschnitt
- 27: Vorsprung
- 28: Stützbereich
- 29: Pedallager
- 30: Eingriffsvorsprung
- 31: Nutöffnung
- 32: Fahrzeugaufbau (schematisch)
- 33: Kraftfahrzeug (schematisch)
- 34: Steuervorrichtung (schematisch)
- G: Gerade
- P: Pfeil
- Q: Pfeil
- R: Pfeil
- S: Symmetrieebene

## Patentansprüche

1. Pedalanordnung für ein Kraftfahrzeug, mit einer Halterung (2) und einem an dieser über eine Steckverbindung, welche eine erste Haltenut (6) und einen in diese eingesteckten ersten Fuß (8) aufweist, der formschlüssig in die erste Haltenut (6) eingreift, befestigten E-Gasmodul (3) mit einem Pedallager (29), an welchem ein Gaspedal (11) um eine Schwenkachse (12) schwenkbar gelagert ist, wobei das E-Gasmodul (3) eine von der Halterung (2) unabhängige bauliche Einheit bildet,
**dadurch gekennzeichnet, dass**
die Steckverbindung im Abstand zur ersten Haltenut (6) eine zweite Haltenut (7) und im Abstand zum ersten Fuß (8) einen zweiten Fuß (9) aufweist, der in die zweite Haltenut (7) eingesteckt ist und formschlüssig in diese eingreift.

2. Pedalanordnung nach Anspruch 1, **dadurch gekennzeichnet, dass** das E-Gasmodul (3) und die Halterung (2) zusätzlich über eine Schnappverbindung miteinander verbunden sind.

3. Pedalanordnung nach Anspruch 1, **dadurch gekennzeichnet, dass** die erste Haltenut (6) parallel zur Schwenkachse (12) verläuft und der erste Fuß (8) parallel zur Schwenkachse (12) in die erste Haltenut (6) eingeschoben ist.

4. Pedalanordnung nach Anspruch 1, **dadurch gekennzeichnet, dass** die erste Haltenut (6) senkrecht zur Schwenkachse (12) verläuft und der erste Fuß (8) senkrecht zur Schwenkachse (12) in die erste Haltenut (6) eingeschoben ist.

5. Pedalanordnung nach einem der Ansprüche 1 oder 3 bis 4, **dadurch gekennzeichnet, dass** die erste Haltenut (6) einen Einführungsbereich (17) sowie einen Eingriffsbereich (16) mit einem Hinterschnitt (20) aufweist, in welchen ein am ersten Fuß (8) vorgesehener Vorsprung (21) eingreift, wobei die Breite der Nutöffnung des Einführungsbereichs quer zur Steckrichtung größer als die Breite der Nutöffnung des Eingriffsbereichs quer zur Steckrichtung ist.

6. Pedalanordnung nach Anspruch 5, **dadurch gekennzeichnet, dass** der Eingriffsbereich (16) und der Einführungsbereich (17) in einer Richtung senkrecht zur Schwenkachse (12) nebeneinander angeordnet sind.

7. Pedalanordnung nach einem der Ansprüche 1 oder 3 bis 6, **dadurch gekennzeichnet, dass** der erste Fuß (8) an dem E-Gasmodul (3) und die erste Haltenut (6) an der Halterung (2) vorgesehen ist.

8. Pedalanordnung nach Anspruch 1, **dadurch gekennzeichnet, dass** die zweite Haltenut (7) senkrecht zur Schwenkachse (12) verläuft und der zweite Fuß (9) senkrecht zur Schwenkachse (12) in die zweite Haltenut (7) eingesteckt ist.

9. Pedalanordnung nach Anspruch 1 oder 9, **dadurch gekennzeichnet, dass** die erste Haltenut (6) und die zweite Haltenut (7) auf einer gemeinsamen Geraden (G) liegen.

10. Pedalanordnung nach einem der Ansprüche 1 oder 9 bis 10, **dadurch gekennzeichnet, dass** die zweite Haltenut (7) an der der ersten Haltenut (6) zugewandten Stirnseite (22) geschlossen ist.

11. Pedalanordnung nach einem der Ansprüche 1 oder 9 bis 11, **dadurch gekennzeichnet, dass** die beiden Füße (8, 9) an der Halterung (2) und die beiden Haltenuten (6, 7) an dem E-Gasmodul (3) vorgesehen sind.

12. Pedalanordnung nach einem der Ansprüche 9 bis 11, **dadurch gekennzeichnet, dass** die beiden Füße (8, 9) an dem E-Gasmodul (3) und die beiden Haltenuten (6, 7) an der Halterung (2) vorgesehen sind.

13. Pedalanordnung nach Anspruch 13, **dadurch gekennzeichnet, dass** der zweite Fuß (9) einen Schnapphaken (14) aufweist, der in eine in der Halterung (2) vorgesehene Ausnehmung (15) eingreift.

14. Kraftfahrzeug mit einer Pedalanordnung (1) nach einem der vorangehenden Ansprüche und einem Fahrzeugaufbau (32), **dadurch gekennzeichnet, dass** die Halterung (2) am Fahrzeugaufbau (32) befestigt ist.

## Claims

1. Pedal arrangement for a motor vehicle, having a support (2) and an electric accelerator module (3), which is fastened thereto by means of a plug-in connection comprising a first retaining groove (6) and a first foot (8) inserted and engaging positively into the first retaining groove (6) and has a pedal bearing (29), on which an accelerator pedal (11) is mounted pivotably about a swivelling axis (12), wherein the electric accelerator module (3) forms a structural unit that is independent of the support (2),
**characterized in that**
the plug-in connection comprises at a distance from the first retaining groove (6) a second retaining groove (7) and at a distance from the first foot (8) a second foot (9), which is inserted and engages positively into the second retaining groove (7).

2. Pedal arrangement according to claim 1, **characterized in that** the electric accelerator module (3) and the support (2) are additionally connected to one another by a snap connection.

3. Pedal arrangement according to claim 1, **characterized in that** the first retaining groove (6) extends parallel to the swivelling axis (12) and the first foot (8) is inserted parallel to the swivelling axis (12) into the first retaining groove (6).

4. Pedal arrangement according to claim 1, **characterized in that** the first retaining groove (6) extends at right angles to the swivelling axis (12) and the first foot (8) is inserted at right angles to the swivelling axis (12) into the first retaining groove (6).

5. Pedal arrangement according to one of claims 1 or 3 to 4, **characterized in that** the first retaining groove (6) comprises an introduction region (17) as well as an engagement region (16) with an undercut (20), into which a projection (21) provided on the first foot (8) engages, wherein the width of the groove opening of the introduction region transversely of the insertion direction is greater than the width of the groove opening of the engagement region transversely of the insertion direction.

6. Pedal arrangement according to claim 5, **characterized in that** the engagement region (16) and the introduction region (17) are disposed side by side in a direction at right angles to the swivelling axis (12).

7. Pedal arrangement according to one of claims 1 or 3 to 6, **characterized in that** the first foot (8) is provided on the electric accelerator module (3) and the first retaining groove (6) is provided on the support (2).

8. Pedal arrangement according to claim 1, **characterized in that** the second retaining groove (7) extends at right angles to the swivelling axis (12) and the second foot (9) is inserted at right angles to the swivelling axis (12) into the second retaining groove (7).

9. Pedal arrangement according to claim 1 or 9, **characterized in that** the first retaining groove (6) and the second retaining groove (7) lie on a common straight line (G).

10. Pedal arrangement according to one of claims 1 or 9 to 10, **characterized in that** the second retaining groove (7) is closed at the end (22) facing the first retaining groove (6).

11. Pedal arrangement according to one of claims 1 or 9 to 11, **characterized in that** the two feet (8, 9) are provided on the support (2) and the two retaining grooves (6, 7) are provided on the electric accelerator module (3).

12. Pedal arrangement according to one of claims 9 to 11, **characterized in that** the two feet (8, 9) are provided on the electric accelerator module (3) and the two retaining grooves (6, 7) are provided on the support (2).

13. Pedal arrangement according to claim 13, **characterized in that** the second foot (9) comprises a snap-action hook (14), which engages into a recess (15) provided in the support (2).

14. Motor vehicle having a pedal arrangement (1) according to one of the preceding claims and a vehicle superstructure (32), **characterized in that** the support (2) is fastened to the vehicle superstructure (32).

## Revendications

1. Agencement de pédalier pour un véhicule automobile, comprenant un support (2) et un module d'accélérateur électrique (3) fixé sur celui-ci via un montage à emboîtement comprenant une première rainure de maintien (6) et une première languette (8) s'emboîtant dans celle-ci, languette qui s'engage avec conjugaison des formes dans cette première rainure de maintien (6), le module comprenant un palier de pédale (29) sur lequel est monté de façon pivotante une pédale d'accélérateur (11) qui pivote autour d'un axe de rotation (12), le module d'accélérateur électrique (3) constituant un ensemble de construction indépendant du support (2),
**caractérisé en ce que**
le montage à emboîtement comporte, à une distance de la première rainure de maintien (6), une deuxième rainure de maintien (7), et à une distance de la première languette (8), une deuxième languette (9) qui est insérée dans la deuxième rainure de maintien (7) et s'y engage avec conjugaison des formes.

2. Agencement de pédalier selon la revendication 1,
**caractérisé en ce que**
le module d'accélérateur électrique (3) et le support (2) sont en outre reliés l'un à l'autre via un montage à enclenchement.

3. Agencement de pédalier selon la revendication 1,
**caractérisé en ce que**
la première rainure de maintien (6) s'étend parallèlement à l'axe de rotation (12), et la première languette (8) est insérée parallèlement à l'axe de rotation (12) dans la première rainure de maintien (6).

4. Agencement de pédalier selon la revendication 1,
**caractérisé en ce que**
la première rainure de maintien (6) s'étend perpendiculairement à l'axe de rotation (12), et la première languette (8) est insérée perpendiculairement à l'axe de rotation (12) dans la première rainure de maintien (6).

5. Agencement de pédalier selon l'une des revendications 1 ou 3 à 4,
**caractérisé en ce que**
la première rainure de maintien (6) comporte une zone d'introduction (17) ainsi qu'une zone d'engagement (16) comprenant une contre-dépouille (23) dans laquelle s'engage une saillie (21) prévue sur la première languette (8), et que la largeur de l'ouverture de la rainure de la zone d'introduction est plus grande, transversalement à la direction d'insertion, que la largeur de la rainure dans la zone d'engagement, transversalement à la direction d'insertion.

6. Agencement de pédalier selon la revendication 5,
**caractérisé en ce que**
la zone d'engagement (16) et la zone d'introduction (17) sont disposées l'une à côté de l'autre dans une direction perpendiculaire à l'axe de rotation (12).

7. Agencement de pédalier selon l'une des revendications 1 ou 3 à 6,
**caractérisé en ce que**
la première languette (8) est prévue sur le module d'accélérateur électrique (3), et la première rainure de maintien (6) est prévue dans le support (2).

8. Agencement de pédalier selon la revendication 1,
**caractérisé en ce que**
la deuxième rainure de maintien (7) s'étend perpendiculairement à l'axe de rotation (12), et la deuxième languette (9) est insérée dans la deuxième rainure de maintien (7), perpendiculairement à l'axe de rotation (12).

9. Agencement de pédalier selon la revendication 1 ou 9,
**caractérisé en ce que**
la première rainure de maintien (6) et la deuxième rainure de maintien (7) se situent sur une droite commune (G).

10. Agencement de pédalier selon l'une des revendications 1 ou 9 à 10,
**caractérisé en ce que**
la deuxième rainure de maintien (7) est fermée sur le côté frontal (22) qui est tourné vers la première rainure de maintien (6).

11. Agencement de pédalier selon l'une des revendications 1 ou 9 à 11,
**caractérisé en ce que**
le deux languettes (8, 9) sont prévues sur le support (2), et les deux rainures de maintien (6, 7) sont prévues dans le module d'accélérateur électrique (3).

12. Agencement de pédalier selon l'une des revendications 9 à 11,
**caractérisé en ce que**
les deux languettes (8, 9) sont prévues sur le module d'accélérateur électrique (3), et les deux rainures de maintien (6, 7) sont prévues dans le support (2).

13. Agencement de pédalier selon la revendication 13,
**caractérisé en ce que** la deuxième languette (9) comporte un crochet d'enclenchement (14) qui s'engage dans un évidement (15) ménagé dans le support (2).

14. Véhicule automobile équipé d'un agencement de pédalier (1) selon l'une des revendications précédentes, et d'une carrosserie (32),
**caractérisé en ce que**
le support (2) est fixé sur la carrosserie (32).
